# FASCICULE DE BREVET EUROPEEN

(11) **EP 4 038 314 B1**
(45) Date de publication et mention de la délivrance du brevet: **25.02.2026**
(21) Numéro de dépôt: 20774979.7
(22) Date de dépôt: 21.09.2020
(51) Int. Cl.: F21S 41/657, F21S 43/19, B60Q 1/05, B60Q 1/26

(54) **DISPOSITIF D'ECLAIRAGE COMPORTANT UN MODULE DE SIGNALISATION MOBILE ET UN MODULE D'ECLAIRAGE MOBILE**
BELEUCHTUNGSVORRICHTUNG MIT EINEM BEWEGLICHEN SIGNALMODUL UND EINEM BEWEGLICHEN BELEUCHTUNGSMODUL
LIGHTING DEVICE COMPRISING A MOVABLE SIGNALLING MODULE AND A MOVABLE LIGHTING MODULE

(30) Priorité: 30.09.2019 FR 1910807
(43) Date de publication de la demande: 10.08.2022
(73) Titulaire: Valeo Vision, 93012 Bobigny Cedex (FR)
(72) Inventeur: SYRE, Matthieu, 93012 Bobigny Cedex (FR); PATRIZI, Stephane, 93012 Bobigny Cedex (FR); RUAT, Olivier, 93012 Bobigny Cedex (FR); TROTTIER, Samuel, 93012 Bobigny Cedex (FR); LOPEZ, Philippe, 93012 Bobigny Cedex (FR)
(74) Mandataire: Valeo Visibility
(86) Numéro de dépôt international: PCT/EP2020/076230
(87) Numéro de publication internationale: WO 2021/063714

(56) Documents cités:
- DE-A1- 102009 030 564
- DE-A1- 102011 051 152
- DE-A1- 102016 124 111
- KR-A- 20150 127 385
- KR-B1- 101 361 090

## Description

L'invention concerne le domaine des dispositifs d'éclairage de véhicule automobile. Plus précisément, l'invention concerne le domaine de l'aspect lumineux d'un dispositif d'éclairage de véhicule automobile en condition diurne et nocturne.

Les dispositifs d'éclairage des véhicules automobiles, et notamment les projecteurs avant, participent fortement à l'aspect esthétique de ces véhicules. En particulier, les constructeurs automobiles conçoivent désormais le style de ces dispositifs d'éclairage de sorte à ce que leur aspect lumineux permettent de les différencier des autres constructeurs grâce à une signature lumineuse réalisée par les différents modules d'éclairage et de signalisation lorsqu'ils sont allumés.

A ce besoin de signature lumineuse s'opposent des contraintes réglementaires définissant non seulement la photométrie des faisceaux lumineux, qu'ils soient pour la signalisation ou l'éclairage, mais encore la période, nocturne ou diurne, pendant laquelle ces faisceaux lumineux doivent être émis. C'est ainsi qu'on distingue par exemple la fonction de signalisation de type feu diurne, également nommée DRL de l'anglais Daytime Running Light, qui doit être allumée de jour et la fonction d'éclairage de type croisement qui doit être allumée de nuit. Ces deux fonctions ne peuvent donc pas être activées simultanément.

Afin de pouvoir réaliser une signature lumineuse constante, que ce soit de jour ou de nuit, il a ainsi été imaginé un dispositif d'éclairage de véhicule automobile comprenant un module de signalisation mobile ainsi qu'un module d'éclairage fixe, et dans lequel le module de signalisation peut être activé pendant une période diurne et peut être escamoté pendant une période nocturne pour laisser paraitre le module d'éclairage qui lorsqu'il est activé, remplace l'aspect lumineux du module de signalisation. DE 10 2016 124111 A1 divulgue un dispositif d'éclairage connu de l'art antérieur.

Toutefois, cette solution n'est pas satisfaisante. Il a en effet été observé qu'une portion significative du faisceau lumineux émis par le module d'éclairage lorsqu'il est activé est obstruée par une partie du module de signalisation escamoté, ce qui pose un problème en termes de contraintes réglementaires puisque l'intensité lumineuse du faisceau lumineux réalisé par le module d'éclairage n'atteint pas des minimums prescrits en certains points de l'espace. En outre, il n'est pas possible d'escamoter suffisamment le module de signalisation pour éviter l'obstruction du faisceau lumineux émis par le module d'éclairage, l'espace disponible étant contraint par les autres pièces du véhicule automobile.

Il existe ainsi un besoin pour un dispositif d'éclairage de véhicule automobile présentant une signature lumineuse globalement constante en mode diurne et nocturne, grâce à un déplacement d'un module de signalisation pour laisser paraitre un module d'éclairage en mode nocturne, et dont le ou les faisceaux lumineux émis par le module d'éclairage satisfont les exigences réglementaires relatives à ces faisceaux. La présente invention s'inscrit dans ce contexte et vise à répondre à ce besoin.

A ces fins, l'invention a pour objet un dispositif d'éclairage pour véhicule automobile, comprenant un module de signalisation mobile selon au moins une première direction et un module d'éclairage mobile selon une deuxième direction distincte de la première direction, le module d'éclairage mobile pouvant emprunter une position invisible et une position visible depuis l'extérieur du dispositif d'éclairage ; le dispositif d'éclairage comportant un contrôleur agencé pour contrôler un déplacement du module d'éclairage de sorte que :
a. dans un premier mode dit mode diurne, le module d'éclairage emprunte la position invisible;
b. dans un deuxième mode dit mode nocturne, le module d'éclairage emprunte la position visible.

L'invention est caractérisé en ce que, lors de la transition du premier mode vers le deuxième mode, le contrôleur est agencé pour contrôler un déplacement du module de signalisation de sorte à ce qu'au moins une partie du module de signalisation se déplace le long de la première direction pour autoriser un déplacement du module d'éclairage le long de la deuxième direction depuis la position invisible vers la position visible.

On comprend ainsi que grâce à l'invention, pendant que le module de signalisation est escamoté pour laisser paraître le module d'éclairage, le module d'éclairage lui-même se déplace afin de s'engager dans l'espace laissé disponible par le module de signalisation. De la sorte, la zone d'émission disponible pour le module d'éclairage lorsqu'il est dans sa position visible est bien supérieure à celle disponible lorsqu'il est dans sa position invisible. Le faisceau lumineux émis par le module d'éclairage lorsqu'il est activé n'est donc plus obstrué par le module de signalisation, de sorte à ce que les exigences relatives à ce faisceau soient satisfaites.

On entend par module de signalisation un module comprenant au moins une unité optique comportant une source lumineuse et un élément optique agencés pour émettre un faisceau lumineux réalisant tout ou partie d'au moins une fonction de signalisation diurne, par exemple un feu diurne. Le cas échéant, le module de signalisation pourra comporter une pluralité d'unités optiques comportant chacune une source lumineuse et un élément optique, chacune des sources lumineuses étant activable sélectivement, le module de signalisation étant ainsi agencé pour réaliser tout ou partir d'un feu diurne, d'un feu de position, d'un indicateur de direction fixe ou défilant et/ou un scénario lumineux de bienvenue. La pluralité d'unités optiques peut être dans ce cas agencée sur une platine commune montée mobile dans le dispositif d'éclairage selon la première direction.

On entend par module d'éclairage un module comprenant au moins une unité optique comportant une source lumineuse et un élément optique agencés pour émettre un faisceau lumineux réalisant tout ou partie d'au moins une fonction d'éclairage réglementaire, par exemple une fonction d'éclairage de type croisement ou de type route.

Avantageusement, le contrôleur peut comporter une horloge interne de sorte à déterminer le mode, diurne ou nocturne, que doit adopter le dispositif d'éclairage. En variante, le contrôleur peut être agencé pour recevoir, par exemple d'un calculateur externe au dispositif, une information relative au mode, diurne ou nocturne, que doit adopter le dispositif d'éclairage.

Avantageusement, les modules de signalisation et d'éclairage peuvent être agencés de sorte que, dans la position invisible du module d'éclairage, le module d'éclairage soit masqué par tout ou partie du module de signalisation, par exemple en étant agencé à l'arrière du module de signalisation. Avantageusement encore, les modules de signalisation et d'éclairage peuvent être agencés de sorte que, dans la transition vers la position visible du module d'éclairage, le module de signalisation soit escamoté selon la première direction et le module d'éclairage est déplacé selon la deuxième direction dans l'espace dégagé par le module de signalisation. Par exemple, la première direction est orientée vers le haut du dispositif d'éclairage, notamment vers le haut et l'arrière du dispositif d'éclairage, et la deuxième direction est orientée vers l'avant du dispositif d'éclairage.

Dans un premier mode de réalisation de l'invention, le module de signalisation mobile peut emprunter une position au moins partiellement invisible et une position visible depuis l'extérieur du dispositif d'éclairage, et le contrôleur peut être agencé pour contrôler un déplacement du module de signalisation de sorte à ce que :
a. dans le premier mode, le module de signalisation emprunte la position visible;
b. dans le deuxième mode, le module de signalisation emprunte la position au moins partiellement invisible.

Par exemple, dans la position au moins partiellement invisible du module de signalisation, le module de signalisation peut être partiellement ou en totalité masqué par un masque du dispositif d'éclairage ou par une portion de carrosserie du véhicule automobile.

Dans un deuxième mode de réalisation de l'invention alternatif ou cumulatif, le contrôleur peut être agencé pour contrôler l'allumage et l'extinction de chacun des modules de signalisation et d'éclairage mobiles. Le cas échéant, dans le premier mode, le contrôleur est agencé pour contrôler l'allumage du module de signalisation et l'extinction du module d'éclairage ; et dans le deuxième mode, le contrôleur est agencé pour contrôler l'allumage du module d'éclairage et l'extinction du module de signalisation. Ces deux modes de réalisation, qu'ils soient prévus ensemble ou séparément, permettent d'obtenir une signature lumineuse constante, en mode diurne comme en mode nocturne.

Si on le souhaite, le dispositif peut comprendre un module de signalisation fixe. Par exemple, le module de signalisation fixe peut être agencé au droit du module de signalisation mobile et le cas échéant du module d'éclairage dans sa position visible.

Selon l'invention, le module de signalisation mobile comporte un premier sous-module de signalisation mobile selon ladite première direction et un deuxième sous-module de signalisation mobile selon une troisième direction distincte des première et deuxième directions. Par exemple, la troisième direction est sensiblement symétrique à la première direction. Selon un exemple, la troisième direction est sensiblement symétrique à la première direction par un axe défini par la deuxième direction.

Avantageusement, le module de signalisation mobile peut emprunter une position fermée dans laquelle les premier et deuxième sous-modules de signalisation empruntent des positions dans lesquelles ils sont sensiblement jointifs et une position ouverte dans laquelle les premier et deuxième sous-modules de signalisation empruntent des positions dans lesquelles ils sont distants l'un de l'autre. Par exemple, dans la position ouverte, les premier et deuxième sous-modules de signalisation sont positionnés de part et d'autre, par exemple au-dessus et en dessous du module d'éclairage dans sa position visible. Le cas échéant, le contrôleur est agencé pour contrôler un déplacement du module de signalisation de sorte à ce que dans le premier mode, le module de signalisation emprunte la position fermée ; et dans le deuxième mode, le module de signalisation emprunte la position ouverte. La position fermée peut ainsi définir la position visible du module de signalisation et la position ouverte peut ainsi définir la position invisible du module de signalisation.

Dans un mode de réalisation de l'invention, le dispositif d'éclairage comporte un premier actionneur pour entrainer un déplacement du module de signalisation mobile et un deuxième actionneur pour entrainer un déplacement du module d'éclairage mobile. Le cas échéant, le contrôleur est agencé pour contrôler les premier et deuxième actionneurs de sorte à ce que les déplacements des modules de signalisation et d'éclairage mobiles selon les première et deuxième directions soient synchrones.

Dans un autre mode de réalisation de l'invention, le dispositif d'éclairage comporte un système d'entrainement reliant mécaniquement les modules de signalisation et d'éclairage mobiles, le système d'entrainement étant agencé de sorte à ce qu'un déplacement de de l'un des modules de signalisation et d'éclairage mobiles selon la première direction, respectivement la seconde direction entraine un déplacement de l'autre des modules des modules de signalisation et d'éclairage mobiles selon la première direction, respectivement la seconde direction. Le cas échéant, seul le déplacements de l'un des modules de signalisation et d'éclairage mobile est entrainé directement au moyen d'un actionneur, le déplacement de l'autre des modules étant entrainé par le système d'entrainement. Par exemple, le système d'entrainement pourra comprendre une ou plusieurs biellettes reliant les modules de signalisation et d'éclairage entre eux.

Avantageusement, le module de signalisation mobile et/ou le module d'éclairage mobile comporte une platine montée mobile en translation dans une glissière fixe. Si on le souhaite, la glissière peut présenter un profil en S. Par exemple, le système d'éclairage pourra comporter deux glissières disposées de part et d'autre de ladite platine montée mobile. Dans le cas du mode de réalisation selon lequel le module de signalisation comporte des premier et deuxième sous-modules de signalisation, on pourra prévoir une pièce de guidage commune dans laquelle sont ménagées au moins une première glissière destinée à recevoir un doigt d'une platine du premier sous-module et une deuxième glissière destinée à recevoir un doigt d'une platine du deuxième sous-module. Le cas échéant, les première et deuxième glissières peuvent être symétriques.

L'invention a également pour objet un procédé de contrôle d'un dispositif d'éclairage selon l'invention.

La présente invention est maintenant décrite à l'aide d'exemples uniquement illustratifs et nullement limitatifs de la portée de l'invention, et à partir des illustrations jointes, dans lesquelles :
[Fig. 1] représente une vue de face d'un dispositif d'éclairage en mode diurne selon un mode de réalisation de l'invention ;
[Fig. 2] représente une coupe en vue de côté du dispositif d'éclairage de la [Fig. 1];
[Fig. 3] représente une coupe en vue de dessus du dispositif d'éclairage de la [Fig. 1] ;
[Fig. 4] représente une vue de face du dispositif d'éclairage de la [Fig. 1] en mode nocturne ;
[Fig. 5] représente une coupe en vue de côté du dispositif d'éclairage de la [Fig. 4] ; et
[Fig. 6] représente une coupe en vue de dessus du dispositif d'éclairage de la [Fig. 4].

Dans la description qui suit, les éléments identiques, par structure ou par fonction, apparaissant sur différentes figures conservent, sauf précision contraire, les mêmes références. En outre, les termes « avant », « arrière », « haut » et « bas » doivent être interprétés dans le contexte de l'orientation du dispositif d'éclairage tel qu'il a été représenté, correspondant à une utilisation normale du dispositif d'éclairage, comme par exemple lorsqu'il est monté dans un véhicule automobile.

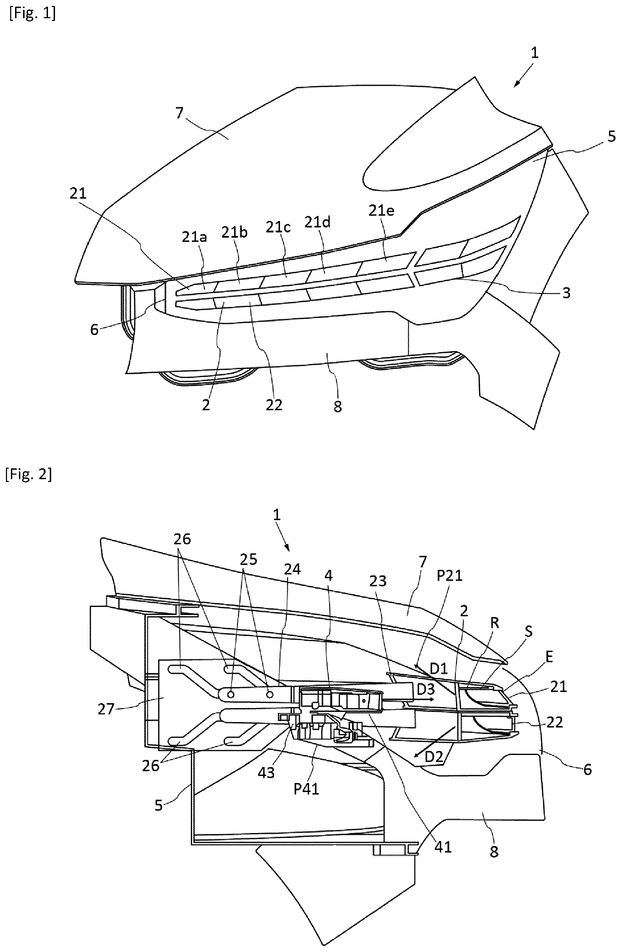

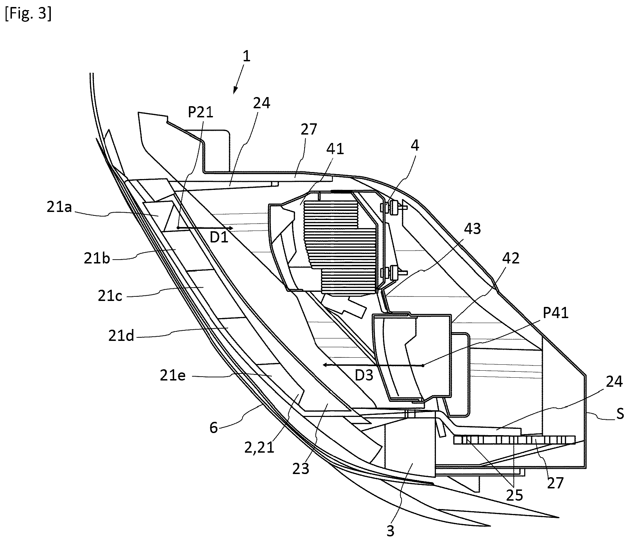

On a représenté en [Fig. 1] une vue de face d'un dispositif d'éclairage 1 selon un mode de réalisation de l'invention. On a également représenté une coupe en vue de côté du dispositif 1 en [Fig.2] et une coupe en vue de dessus du dispositif 1 en [Fig. 3]. La description du dispositif 1 qui suit fait ainsi référence aux trois figures [Fig. 1], [Fig. 2] et [Fig. 3].

Le dispositif d'éclairage 1 comporte un boîtier 5 fermé par une glace d'étanchéité 6. Le dispositif d'éclairage 1 est un projecteur avant, montré en [Fig. 1] en mode diurne et installé dans un véhicule automobile, entre la carrosserie 7 et le pare-chocs 8, qui encadrent ainsi la glace 6.

Le dispositif d'éclairage comporte un module de signalisation mobile 2, un module de signalisation fixe 3 et un module d'éclairage mobile 4, tous installés dans le boîtier 5. Les modules mobiles 2 et 4 sont montés mobile par rapport au boîtier 5.

Le module de signalisation mobile 2 comporte un premier sous-module de signalisation mobile 21 selon une direction D1 et un deuxième sous-module de signalisation mobile 22 selon une direction D2. Le premier sous-module 21 est un sous-module dit supérieur tandis que le deuxième sous-module 22 est un sous-module dit inférieur, agencé en dessous du sous-module supérieur 21.La direction D1 est orientée vers le haut et vers l'arrière du dispositif d'éclairage, tandis que la direction D2 est orientée vers le bas et vers l'arrière du dispositif d'éclairage, de façon symétrique à la direction D1.

Les structures des sous-modules supérieur 21 et inférieur 22 sont identiques. Ainsi, seule celle du sous-module supérieur 21 va être décrite. Le sous-module supérieur 21 comporte une pluralité d'unités optiques 21a à 21e disposées côte à côte selon la largeur du dispositif d'éclairage 1. Chacune des unités optiques 21a à 21e comporte une source lumineuse S, un réflecteur R et un écran E. La pluralité d'unités optiques 21a à 21e est agencée sur une platine commune 23 du sous-module supérieur 21, présentant deux ailes 24 s'étendant vers l'arrière du dispositif d'éclairage 1. Chaque aile 24 comporte deux doigts 25 qui sont montés chacun dans une glissière 26 ajourée dans une pièce de guidage 27. Le dispositif d'éclairage 1 comporte ainsi deux pièces de guidage 27 disposées de part et d'autre du module de signalisation mobile 2. Il est à noter que les pièces de guidage 27 sont communes aux sous-modules supérieur 21 et inférieur 22, et qu'elles présentent chacune à cet effet quatre glissières 26, deux supérieures et deux inférieures, pour recevoir chacune l'un des doigts des ailes de chaque platine. Les glissières sont symétriques par un plan horizontal et présentent chacune un profil en S qui définit les directions de déplacement D1 et D2 des sous-modules supérieur 21 et inférieur 22. Une paire d'actionneurs, non représentés, est prévue dans le dispositif d'éclairage 1 pour entrainer un déplacement synchrone des sous-modules supérieur 21 et inférieur 22 selon les directions D1 et D2, par exemple en appliquant un effort simultané et d'intensité égal sur les ailes 24.

Le module d'éclairage mobile 4 comporte un premier sous-module d'éclairage 41 et un deuxième sous-module d'éclairage 42, disposés côté à côté selon la largeur du dispositif d'éclairage 1. Chacun des sous-modules 41 et 42 comporte une pluralité de sources lumineuses associés à un système optique, par exemple du type guide de lumière et lentille (non représentés). Ces sous-modules 41 et 42 sont montés sur une platine commune 43, montée mobile en translation dans le boîtier 5 du dispositif d'éclairage 1 selon une direction horizontale D3, orientée vers l'avant du dispositif d'éclairage 1. Un actionneur, non représenté, est également prévu dans le dispositif d'éclairage 1 pour entrainer un déplacement du module d'éclairage 4 selon la direction D3.

Enfin, le module de signalisation fixe 3 est fixé à demeure dans le boîtier 5, au droit du module de signalisation mobile 2, et comprend une source de lumière et un réflecteur (non représentés).

On va maintenant décrire les positions des différents modules 2, 3 et 4 dans le mode diurne du dispositif d'éclairage 1 ainsi que les différentes fonctions que peuvent exécuter ces modules.

En mode diurne, comme montré sur les [Fig. 1], [Fig. 2] et [Fig. 3], les sous-modules de signalisation supérieur 21 et inférieur 22 empruntent des positions dans lesquelles ils sont sensiblement jointifs, le module de signalisation mobile 2 empruntant ainsi une position P21 dite fermée, dans laquelle il est visible depuis l'extérieur du dispositif d'éclairage 1 à travers la glace 6. La position P21 correspond à une position de fin de course, dite proximale par rapport à la glace 6, des doigts 25 dans les glissières 26. Toujours dans ce mode diurne, le module d'éclairage mobile 4 emprunte une position P41 selon laquelle il est disposé à l'arrière du module de signalisation mobile 2 dans sa position fermée P21. Dans cette position P41 dite invisible, le module d'éclairage 4 est totalement masqué par le module de signalisation mobile 2.

Un contrôleur (non représenté) peut ainsi contrôler les modules de signalisation mobile 2 et fixe 3 pour réaliser l'une des fonctions suivantes :
a. émission simultanée par les sources lumineuses des unités optiques 21a à 21e ainsi que par celle du module de signalisation fixe 3 d'un faisceau lumineux de couleur blanche, par exemple pour réaliser une fonction de type feu diurne ou DRL réglementaire ;
b. émission séquentielle par chacune des sources lumineuses des unités optiques 21a à 21e puis par celle du module de signalisation fixe 3 d'un faisceau lumineux de couleur jaune ou ambre, par exemple pour réaliser une fonction d'indicateur de direction défilant réglementaire;
c. émission séquentielle par chacune des sources lumineuses des unités optiques 21a à 21e puis par celle du module de signalisation fixe 3 d'un faisceau lumineux de couleur blanche, par exemple pour réaliser une fonction de scénario lumineux de bienvenue.

Pendant la réalisation des fonctions citées ci-dessus, le module d'éclairage mobile 4 est éteint.

Le contrôleur est muni d'une horloge interne lui permettant de déterminer les conditions de fonctionnement du dispositif d'éclairage 1 et en particulier si le dispositif d'éclairage 1 doit fonctionner en mode diurne ou nocturne. En outre, le contrôleur est agencé pour contrôler les actionneurs permettant de déplacer les modules de signalisation mobile 2 et d'éclairage mobile 4.

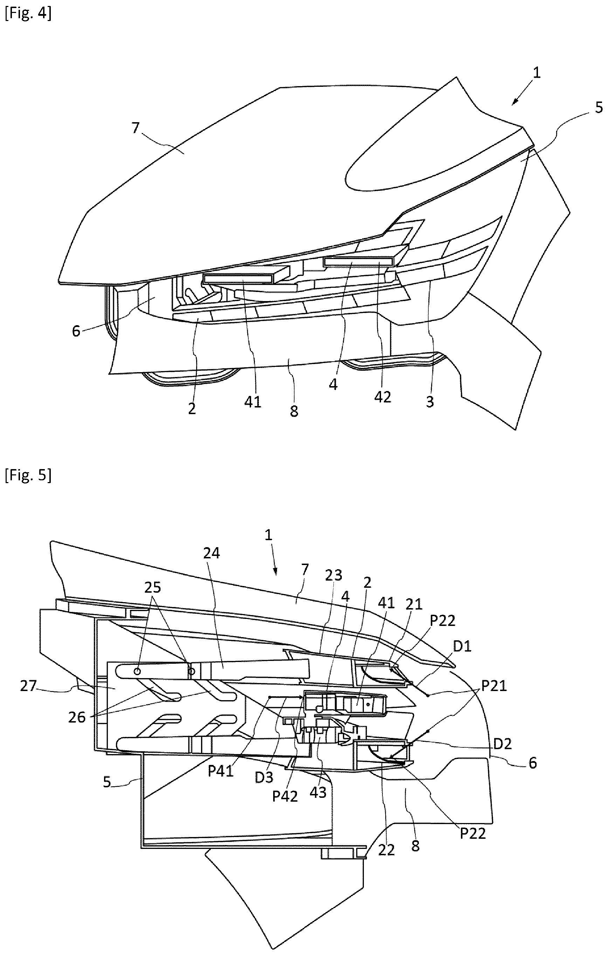

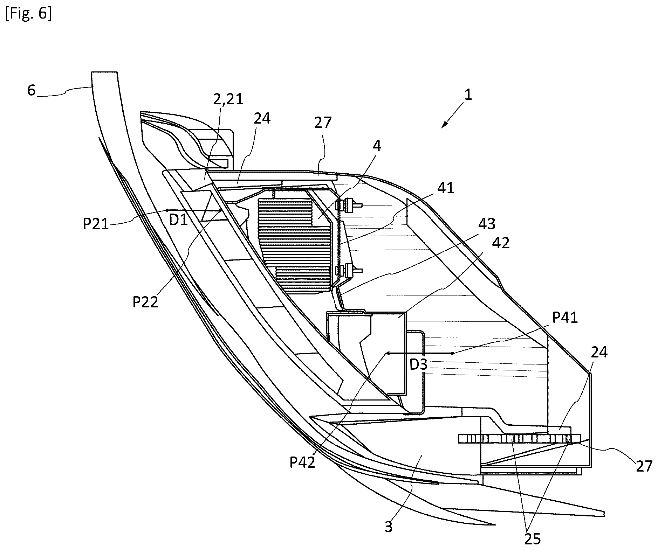

On va maintenant décrire la transition du mode diurne au mode nocturne du dispositif d'éclairage 1 et les positions des différents modules 2, 3 et 4 ainsi que les différentes fonctions que peuvent exécuter ces modules dans ce mode nocturne. A cet effet, on a représenté une vue de face en [Fig. 4], une coupe en vue de côté en [Fig.5] et une coupe en vue de dessus en [Fig. 6] du dispositif d'éclairage 1 en mode nocturne.

Lors de la transition du mode diurne vers le mode nocturne, le contrôleur contrôle les actionneurs entrainant un déplacement des sous-modules de signalisation supérieur 21 et inférieur 22 de sorte à ce que ces sous-modules 21 et 22 se déplacent selon les directions D1 et D2 vers des positions dans lesquelles ils sont distants l'un de l'autre. En mode nocturne, le module de signalisation mobile 2 emprunte ainsi une position P22 dite ouverte, les sous-modules 21 et 22 étant partiellement masqués par la carrosserie 7 et le pare-chocs 8 et le module de signalisation mobile 2 étant ainsi partiellement invisible depuis l'extérieur du dispositif d'éclairage 1. La position P22 correspond à une position de fin de course, dite distale, par rapport à la glace 6, des doigts 25 dans les glissières 26.

En outre, lors de la transition du mode diurne vers le mode nocturne, le contrôleur contrôle l'actionneur entrainant un déplacement du module d'éclairage 4 de sorte à ce que le module d'éclairage 5 se déplace selon la direction D3, vers l'espace dégagé par les sous-modules de signalisation 21 et 22. Le contrôle des actionneurs est réalisé de façon synchrone de sorte à ce que le déplacement des sous-modules de signalisation 21 et 22 le long des directions D1 et D2 autorise le déplacement des sous-modules d'éclairage 41 et 42 le long de la direction D3. En d'autres termes, l'espace progressivement dégagé par les sous-modules de signalisation 21 et 22 permet d'accueillir le module d'éclairage 4 au cours de son propre déplacement.

En mode nocturne, le module d'éclairage mobile 2 emprunte ainsi une position P42 dite visible depuis l'extérieur du dispositif d'éclairage 1, dans laquelle, d'une part, il n'est plus masqué par les sous-modules de signalisation 21 et 22 et d'autre part, l'espace rendu disponible par l'escamotage des sous-modules de signalisation 21 et 22 crée une zone d'émission suffisante pour qu'un faisceau lumineux puisse être émis par les sous-modules d'éclairage 41 et 42 sans risquer une obstruction par ces sous-modules 21 et 22.

En mode nocturne, le contrôleur peut ainsi contrôler le module d'éclairage mobile 4 pour réaliser l'une des fonctions suivantes :
a. émission simultanée par les sources lumineuses des sous-modules d'éclairage 41 et 42 d'un faisceau lumineux de couleur blanche, par exemple pour réaliser une fonction de type éclairage de croisement ou éclairage de route réglementaire ;
b. émission par certaines seulement des sources lumineuses des sous-modules d'éclairage 41 et 42 d'un faisceau lumineux de couleur blanche comportant une zone sombre, par exemple pour réaliser une fonction de type éclairage de de route non éblouissant.

En outre, pendant la réalisation des fonctions citées ci-dessus, le contrôleur contrôle l'allumage du module de signalisation fixe 3 pour réaliser une fonction de type feu de position, le module de signalisation mobile 4 restant éteint.

On constate ainsi que, que l'on soit en conditions diurne ou nocturne, l'aspect allumé du dispositif d'éclairage 1 reste globalement le même, ce qui permet d'obtenir une signature lumineuse constante, de jour comme de nuit.

La description qui précède a permis d'expliquer comment s'opère la transition du mode diurne vers le mode nocturne. Il va de soi que les déplacements des modules de signalisation mobile 2 et d'éclairage mobile 4 sont réversibles, de sorte à ce que, lors de la transition du mode nocturne vers le mode diurne, le module d'éclairage mobile 4 regagne sa position invisible P41 et le module de signalisation mobile 2 regagne simultanément sa position fermée P21. En d'autres termes, le contrôleur contrôle le déplacement du module d'éclairage mobile 4 de sorte à ce que ce module d'éclairage mobile 4 se déplace selon la direction D3 pour autoriser un déplacement du module de signalisation mobile 2 le long des direction D1 et D2 depuis sa position ouverte vers sa position fermée.

La description qui précède explique clairement comment l'invention permet d'atteindre les objectifs qu'elle s'est fixée, et notamment en proposant un dispositif d'éclairage dans lequel, lors de la transition d'un mode diurne vers un mode nocturne, le déplacement d'un module de signalisation laisse apparaitre un module d'éclairage tout en autorisant le déplacement de ce module d'éclairage. De la sorte, l'escamotage du module de signalisation agrandit la zone d'émission disponible pour le module d'éclairage, de sorte à éviter une obstruction d'un faisceau lumineux émis par ce module d'éclairage.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra prévoir d'autres types de configuration pour les positions visible et invisible que la configuration ouverte/fermée, ainsi que d'autres modes de déplacement des modules d'éclairage et de signalisation mobile, et en particulier l'utilisation d'un système d'entrainement, par exemple à base de biellette, permettant de déplacer de façon synchrone ces modules à l'aide d'un unique actionneur.

## Revendications

1. Dispositif d'éclairage (1) pour véhicule automobile, comprenant un module de signalisation mobile (2) selon au moins une première direction (D1) et un module d'éclairage mobile (4) selon une deuxième direction (D3) distincte de la première direction, le module d'éclairage mobile pouvant emprunter une position invisible (P41) et une position visible (P42) depuis l'extérieur du dispositif d'éclairage ; le dispositif d'éclairage comportant un contrôleur agencé pour contrôler un déplacement du module d'éclairage de sorte que :
a. dans un premier mode dit mode diurne, le module d'éclairage emprunte la position invisible;
b. dans un deuxième mode dit mode nocturne, le module d'éclairage emprunte la position visible ;
le dispositif d'éclairage étant tel que, lors de la transition du premier mode vers le deuxième mode, le contrôleur est agencé pour contrôler un déplacement du module de signalisation de sorte à ce qu'au moins une partie du module de signalisation se déplace le long de la première direction pour autoriser un déplacement du module d'éclairage le long de la deuxième direction depuis la position invisible vers la position visible
**caractérisé en ce que** le module de signalisation mobile (2) comporte un premier sous-module de signalisation (21) mobile selon ladite première direction (D1) et un deuxième sous-module de signalisation (22) mobile selon une troisième direction (D2) distincte des première et deuxième directions.

2. Dispositif d'éclairage (1) selon la revendication précédente, dans lequel le module de signalisation mobile (4) peut emprunter une position au moins partiellement invisible (P22) et une position visible (P21) depuis l'extérieur du dispositif d'éclairage, et dans lequel le contrôleur est agencé pour contrôler un déplacement du module de signalisation de sorte à ce que :
a. dans le premier mode, le module de signalisation emprunte la position visible;
b. dans le deuxième mode, le module de signalisation emprunte la position au moins partiellement invisible.

3. Dispositif d'éclairage (1) selon l'une des revendications précédentes, dans lequel le contrôleur est agencé pour contrôler l'allumage et l'extinction de chacun des modules de signalisation (2) et d'éclairage (4) mobiles, et dans lequel :
a. dans le premier mode, le contrôleur est agencé pour contrôler l'allumage du module de signalisation et l'extinction du module d'éclairage ;
b. dans le deuxième mode, le contrôleur est agencé pour contrôler l'allumage du module d'éclairage et l'extinction du module de signalisation.

4. Dispositif d'éclairage (1) selon l'une des revendications précédentes, comprenant un module de signalisation fixe (3).

5. Dispositif d'éclairage (1) selon l'une des revendications précédentes, dans lequel la troisième direction (D2) est sensiblement symétrique à la première direction (D1).

6. Dispositif d'éclairage (1) selon l'une des revendications précédentes, dans lequel le module de signalisation mobile (2) peut emprunter une position fermée (P21) dans laquelle les premier (21) et deuxième (22) sous-modules de signalisation empruntent des positions dans lesquelles ils sont sensiblement jointifs et une position ouverte (P22) dans laquelle les premier et deuxième sous-modules de signalisation empruntent des positions dans lesquelles ils sont distants l'un de l'autre, et dans lequel le contrôleur est agencé pour contrôler un déplacement du module de signalisation de sorte à ce que:
a. dans le premier mode, le module de signalisation emprunte la position fermée ;
b. dans le deuxième mode, le module de signalisation emprunte la position ouverte.

7. Dispositif d'éclairage (1) selon l'une des revendications précédentes, le dispositif d'éclairage comportant un premier actionneur pour entrainer un déplacement du module de signalisation mobile (2) et un deuxième actionneur pour entrainer un déplacement du module d'éclairage mobile (4), dans lequel le contrôleur est agencé pour contrôler les premier et deuxième actionneurs de sorte à ce que les déplacements des modules de signalisation et d'éclairage mobiles selon les première (D1) et deuxième (D3) directions soient synchrones.

8. Dispositif d'éclairage (1) selon l'une des revendications 1 à 6, dans lequel le dispositif d'éclairage comporte un système d'entrainement reliant mécaniquement les modules de signalisation (2) et d'éclairage (4) mobiles, le système d'entrainement étant agencé de sorte à ce qu'un déplacement de l'un des modules de signalisation et d'éclairage mobiles selon la première (D1), respectivement la seconde (D3) direction entraine un déplacement de l'autre des modules des modules de signalisation et d'éclairage mobiles selon la première, respectivement la seconde direction.

9. Dispositif d'éclairage (1) selon l'une quelconque des revendications précédentes, dans lequel le module de signalisation mobile (2) et/ou le module d'éclairage mobile (4) comporte une platine (23, 43) montée mobile en translation dans une glissière fixe (26).

## Patentansprüche

1. Beleuchtungsvorrichtung (1) für ein Kraftfahrzeug, umfassend ein in mindestens einer ersten Richtung (D1) bewegliches Signalmodul (2) und ein in einer zweiten Richtung (D3) bewegliches Beleuchtungsmodul (4), wobei die zweite Richtung von der ersten Richtung verschieden ist, wobei das bewegliche Beleuchtungsmodul eine von außerhalb der Beleuchtungsvorrichtung unsichtbare Position (P41) und eine sichtbare Position (P42) einnehmen kann; wobei die Beleuchtungsvorrichtung eine Steuerung aufweist, die dazu eingerichtet ist, eine Bewegung des Beleuchtungsmoduls so zu steuern, dass:
a. in einem ersten, als Tagmodus bezeichneten Modus das Beleuchtungsmodul die unsichtbare Position einnimmt;
b. in einem zweiten, als Nachtmodus bezeichneten Modus das Beleuchtungsmodul die sichtbare Position einnimmt;
wobei die Beleuchtungsvorrichtung so ausgebildet ist, dass beim Übergang vom ersten Modus zum zweiten Modus die Steuerung dazu eingerichtet ist, eine Bewegung des Signalmoduls so zu steuern, dass sich mindestens ein Teil des Signalmoduls entlang der ersten Richtung bewegt, um eine Bewegung des Beleuchtungsmoduls entlang der zweiten Richtung von der unsichtbaren Position zur sichtbaren Position zu ermöglichen,
**dadurch gekennzeichnet, dass** das bewegliche Signalmodul (2) ein erstes Signalteilmodul (21), das in der ersten Richtung (D1) beweglich ist, und ein zweites Signalteilmodul (22) umfasst, das in einer dritten Richtung (D2) beweglich ist, die von der ersten und zweiten Richtung verschieden ist.

2. Beleuchtungsvorrichtung (1) nach dem vorhergehenden Anspruch, wobei das bewegliche Signalmodul (4) eine von außerhalb der Beleuchtungsvorrichtung zumindest teilweise unsichtbare Position (P22) und eine sichtbare Position (P21) einnehmen kann, und wobei die Steuerung dazu eingerichtet ist, eine Bewegung des Signalmoduls so zu steuern, dass:
a. im ersten Modus das Signalmodul die sichtbare Position einnimmt;
b. im zweiten Modus das Signalmodul die zumindest teilweise unsichtbare Position einnimmt.

3. Beleuchtungsvorrichtung (1) nach einem der vorhergehenden Ansprüche, wobei die Steuerung dazu eingerichtet ist, das Ein- und Ausschalten jedes der beweglichen Signalmodule (2) und Beleuchtungsmodule (4) zu steuern, und wobei:
a. im ersten Modus die Steuerung dazu eingerichtet ist, das Einschalten des Signalmoduls und das Ausschalten des Beleuchtungsmoduls zu steuern;
b. im zweiten Modus die Steuerung dazu eingerichtet ist, das Einschalten des Beleuchtungsmoduls und das Ausschalten des Signalmoduls zu steuern.

4. Beleuchtungsvorrichtung (1) nach einem der vorhergehenden Ansprüche, umfassend ein festes Signalmodul (3).

5. Beleuchtungsvorrichtung (1) nach einem der vorhergehenden Ansprüche, wobei die dritte Richtung (D2) im Wesentlichen symmetrisch zur ersten Richtung (D1) ist.

6. Beleuchtungsvorrichtung (1) nach einem der vorhergehenden Ansprüche, wobei das bewegliche Signalmodul (2) eine geschlossene Position (P21), in der das erste (21) und zweite (22) Signalteilmodul Positionen einnehmen, in denen sie im Wesentlichen aneinander anliegen, und eine offene Position (P22) einnehmen kann, in der das erste und zweite Signalteilmodul Positionen einnehmen, in denen sie voneinander beabstandet sind, und wobei die Steuerung dazu eingerichtet ist, eine Bewegung des Signalmoduls so zu steuern, dass:
a. im ersten Modus das Signalmodul die geschlossene Position einnimmt;
b. im zweiten Modus das Signalmodul die offene Position einnimmt.

7. Beleuchtungsvorrichtung (1) nach einem der vorhergehenden Ansprüche, wobei die Beleuchtungsvorrichtung einen ersten Aktuator zum Antreiben einer Bewegung des beweglichen Signalmoduls (2) und einen zweiten Aktuator zum Antreiben einer Bewegung des beweglichen Beleuchtungsmoduls (4) aufweist, wobei die Steuerung dazu eingerichtet ist, den ersten und zweiten Aktuator so zu steuern, dass die Bewegungen der beweglichen Signal- und Beleuchtungsmodule in der ersten (D1) und zweiten (D3) Richtung synchron sind.

8. Beleuchtungsvorrichtung (1) nach einem der Ansprüche 1 bis 6, wobei die Beleuchtungsvorrichtung ein Antriebssystem aufweist, das die beweglichen Signal- (2) und Beleuchtungsmodule (4) mechanisch verbindet, wobei das Antriebssystem so eingerichtet ist, dass eine Bewegung eines der beweglichen Signal- und Beleuchtungsmodule in der ersten (D1) bzw. zweiten (D3) Richtung eine Bewegung des anderen der beweglichen Signal- und Beleuchtungsmodule in der ersten bzw. zweiten Richtung bewirkt.

9. Beleuchtungsvorrichtung (1) nach einem der vorhergehenden Ansprüche, wobei das bewegliche Signalmodul (2) und/oder das bewegliche Beleuchtungsmodul (4) eine Platte (23, 43) umfasst, die in einer festen Führung (26) translatorisch beweglich montiert ist.

## Claims

1. A motor-vehicle lighting device (1), comprising a signaling module (2) that is moveable in at least a first direction (D1) and a lighting module (4) that is moveable in a second direction (D3) different from the first direction, the moveable lighting module being able to assume a position (P41) in which it is invisible and a position (P42) in which it is visible from outside the lighting device; the lighting device comprising a controller arranged to control a movement of the lighting module so that:
a. in a first mode, called the daytime mode, the lighting module assumes the invisible position;
b. in a second mode, called the nighttime mode, the lighting module assumes the visible position;
the lighting device being such that, during the transition from the first mode to the second mode, the controller is arranged to control a movement of the signaling module so that at least one portion of the signaling module moves in the first direction to permit a movement of the lighting module in the second direction from the invisible position to the visible position
**characterized in that** the moveable signaling module (2) comprises a first signaling sub-module (21) that is moveable in said first direction (D1) and a second signaling sub-module (22) that is moveable in a third direction (D2) different from the first and second directions.

2. The lighting device (1) as claimed in the preceding claim, wherein the moveable signaling module (4) is able to assume a position (P22) in which it is at least partially invisible and a position (P21) in which it is visible from outside the lighting device, and wherein the controller is arranged to control a movement of the signaling module so that:
a. in the first mode, the signaling module assumes the visible position;
b. in the second mode, the signaling module assumes the position in which it is at least partially invisible.

3. The lighting device (1) as claimed in one of the preceding claims, wherein the controller is arranged to control the turn-on and turn-off of each of the moveable signaling and lighting modules (2, 4), and wherein:
a. in the first mode, the controller is arranged to turn on the signaling module and turn off the lighting module;
b. in the second mode, the controller is arranged to turn on the lighting module and turn off the signaling module.

4. The lighting device (1) as claimed in one of the preceding claims, comprising a fixed signaling module (3).

5. The lighting device (1) as claimed in one of the preceding claims, wherein the third direction (D2) is substantially symmetric to the first direction (D1).

6. The lighting device (1) as claimed in one of the preceding claims, wherein the moveable signaling module (2) is able to assume a closed position (P21) in which the first and second signaling sub-modules (21, 22) assume positions in which they are substantially contiguous and an open position (P22) in which the first and second signaling sub-modules assume positions in which they are distant from each other, and wherein the controller is arranged to control a movement of the signaling module so that:
a. in the first mode, the signaling module assumes the closed position;
b. in the second mode, the signaling module assumes the open position.

7. The lighting device (1) as claimed in one of the preceding claims, the lighting device comprising a first actuator for driving a movement of the moveable signaling module (2) and a second actuator for driving a movement of the moveable lighting module (4), wherein the controller is arranged to control the first and second actuators so that the movements of the moveable signaling and lighting modules in the first and second directions (D1, D3) are synchronous.

8. The lighting device (1) as claimed in one of claims 1 to 6, wherein the lighting device comprises a drive system that mechanically links the moveable signaling and lighting modules (2, 4), the drive system being arranged so that a movement of one of the moveable signaling and lighting modules in the first direction (D1) drives a movement of the other of the modules of the moveable signaling and lighting modules in the first direction, and so that a movement of one of the moveable signaling and lighting modules in the second direction (D3) drives a movement of the other of the modules of the moveable signaling and lighting modules in the second direction.

9. The lighting device (1) as claimed in any one of the preceding claims, wherein the moveable signaling module (2) and/or the moveable lighting module (4) comprises a plate (23, 43) that is mounted so as to be moveable translationally in a fixed slideway (26).
